Europäisches Patentamt

European Patent Office

Office européen des brevets

(11) Veröffentlichungsnummer: **0 172 483**

**A1**

## (12) EUROPÄISCHE PATENTANMELDUNG

(21) Anmeldenummer: 85109821.0

(22) Anmeldetag: 05.08.85

(51) Int. Cl.⁴: **A 01 B 39/26**

(30) Priorität: 21.08.84 US 642984

(43) Veröffentlichungstag der Anmeldung:
26.02.86 Patentblatt 86/9

(84) Benannte Vertragsstaaten:
DE FR GB

(71) Anmelder: DEERE & COMPANY
1 John Deere Road
Moline Illinois 61265(US)

(72) Erfinder: Meinert, Harry Mathais
8420 N.W. Country Club Drive
Urbandale Iowa 50322(US)

(74) Vertreter: Feldmann, Bernhard et al,
DEERE & COMPANY European Office, Patent
Department Steubenstrasse 36-42 Postfach 503
D-6800 Mannheim 1(DE)

(54) Bodenbearbeitungsgerät.

(57) Ein Bodenbearbeitungsgerät mit einem Rahmen (12) ist mit mehreren Gestellen (10), an denen Werkzeugzusammenbauten (24) mit Bodenbearbeitungswerkzeugen (32) zum Auslichten von Pflanzen angebracht sind, ausgerüstet. Die Gestelle (10) greifen an dem Rahmen (12) vertikal schwenkbar an und sind mit einer Schutzanordnung (50) versehen, die die Pflanzen seitlich abschirmt, so daß beim Bearbeiten des Bodens hochgeworfenes Erdreich die Pflanzen nicht zudeckt. Die Schutzanordnung (50) ist vertikal schwenkbar ausgebildet und kann aus einer Stellung oberhalb der Pflanzenreihen in eine Stellung gebracht werden, in der sie nicht mit den Pflanzen in Berührung kommt und in der sie sich oberhalb der Werkzeugzusammenbauten (24) befindet. Hierzu wird die Schutzanordnung (50) um eine sich in der Arbeitsrichtung des Bodenbearbeitungsgerätes erstreckende Achse (94) nach oben geschwenkt.

EP 0 172 483 A1

./...

Fig. 1

0172483

# Bodenbearbeitungsgerät

Die Erfindung betrifft ein Bodenbearbeitungsgerät mit einem Rahmen zur Bearbeitung des zwischen zwei Pflanzenreihen befindlichen Bodens, mit mindestens einem Werkzeugträger, der an dem Rahmen angreift, und mit mindestens einer vertikal schwenkbaren Schutzanordnung zum seitlichen Abschirmen der Pflanzen während des Bodenbearbeitungsvorgangs, die seitlich des Werkzeugträgers angeordnet ist.

Dieses Bodenbearbeitungsgerät (John Deere Row-Crop Cultivating and Thinning Equipment, A-11-82-9) weist eine Vielzahl von parallel zueinander angeordneten Werkzeugträgern mit Hackscharen auf, die dem Auslichten von beispielsweise zwischen Maispflanzenreihen sich befindlichem Gras und sonstigem Unkraut dienen. Damit von den Hackscharen aufgeworfener Boden nicht auf die Pflanzen, insbesondere wenn diese noch sehr klein sind, geschleudert wird, ist zwischen jeweils zwei Werkzeugträgern eine Schutzanordnung mit einer Schutzschildanordnung vorgesehen, die auf dem Boden abrollende Schutzschilder aufweist. Die Schutzanordnung greift über ein Horizontalgelenk, das sich quer zur Arbeitsrichtung des Bodenbearbeitungsgerätes erstreckt und an dem Rahmen angebracht ist, an dem Rahmen an und kann somit den Bodenunebenheiten folgen bzw. auf dem Boden liegende Gegenstände oder Materialanhäufungen weitmöglichst überrollen. Soll der Boden zwischen zwei Reihen bereits größerer Pflanzen bearbeitet werden, dann wird die Schutzschildanordnung nach oben geschwenkt, damit sie die Pflanzen so wenig wie möglich berührt, und mit einer Kette gesichert oder vollkommen von dem Rahmen demontiert.

Dieses Bodenbearbeitungsgerät ist noch verbesserungsfähig, und zwar im Hinblick auf den von der Schutzanordnung zu schaffenden Freiraum, wenn der Boden zwischen zwei Reihen großer und hoher Pflanzen bearbeitet werden soll. Ferner könnten Probleme auftreten, wenn der Rahmen aus einem Hauptrahmen und an diesen seitlich angelenkten, vertikal schwenkbaren Seitenrahmen besteht, die zu Transportzwecken vertikal über den Hauptrahmen geklappt werden, da dann die Schutzschildanordnung nach unten fällt, sofern nicht ein Anschlag vorgesehen ist. Schließlich müßte der Rahmen an seinen seitlichen Endbereichen über die Werkzeugträger hinaus verlängert werden, damit an ihm noch eine Schutzanordnung seitlich des äußersten Werkzeugträgers angebracht werden kann, oder die äußerste Schutzanordnung entfällt, was jedoch den Nachteil nach sich ziehen würde, daß die äußerste Pflanzenreihe nicht mehr gegen aufgeworfenen Boden geschützt wird.

Die der Erfindung zugrunde liegende Aufgabe wird darin gesehen, das Bodenbearbeitungsgerät derart zu gestalten, daß seine Schutzschildanordnung im Bedarfsfall vollkommen außerhalb des Pflanzenbereiches gebracht werden kann, ohne daß sie entfernt werden müßte.

Diese Aufgabe ist erfindungsgemäß dadurch gelöst worden, daß die Schutzanordnung aus dem Freiraum oberhalb der Pflanzen heraus und in einen Bereich oberhalb des Werkzeugträgers schwenkbar ist.

Auf diese Weise kann die Schutzanordnung, insbesondere deren Schutzschildanordnung, in einen Bereich gebracht werden, der ohnehin zwischen zwei Pflanzenreihen liegt und der zudem mit dem Werkzeugträger fluchtet. Somit wird auch vermieden, daß, wie es bei der bekannten Ausführung der Fall ist, Pflanzenstengel, die durch den Rahmen niedergedrückt werden und nachdem der Rahmen den Pflanzenstengel nicht mehr niedergedrückt hält, nach oben gegen den Werkzeugträger schlagen und durch die Schutzanordnung eventuell beschädigt werden.

Im folgenden wird näher auf die Erfindung vorteilhaft fortentwickelnde Merkmale eingegangen.

So kann auf technisch einfache Weise die Schutzanordnung aus dem Pflanzenbereich gebracht werden, wenn sie wie nach Anspruch 2 vorgesehen angeordnet ist.

Ein Bodenbearbeitungsgerät, dessen Werkzeugträger vertikal schwenkbar an den Rahmen angebracht und auf einem Spurrad getragen ist und dessen Schutzanordnung mit dem Werkzeugträger verbunden ist, kann ohne Bedenken über auf dem Boden liegende Materialanhäufungen aus Erntegutresten, Unkraut oder Erdreichhügeln gezogen werden, ohne befürchten zu müssen, daß die Schutzanordnung bzw. deren Schutzschildanordnung in diese Materialanhäufung eintaucht und verstopft. Der Werkzeugträger wird nämlich mittels des Spurrades die Materialanhäufung überrollen und dabei die Schutzanordnung anheben.

Um optimale Bewegungsmöglichkeiten für die Schutzanordnung zu erhalten, und zwar mit Bezug auf die Anpassungsfähigkeit gegenüber Bodenunebenheiten wie auch auf die Möglichkeit, in eine nicht hindernde Stellung gebracht werden zu können, ist vorgesehen, daß die Schutzanordnung einen Schwenkarm, einen Halterahmen und eine Schutzschildanordnung aufweist, wobei die Schutzschildanordnung vertikal und in der Arbeitsrichtung des Bodenbearbeitungsgeräts schwenkbar an dem Schwenkarm und der Schwenkarm vertikal und quer zur Arbeitsrichtung des Bodenbearbeitungsgerätes schwenkbar an dem Halterahmen angeordnet ist.

Die Ausbildung des Bodenbearbeitungsgeräts hinsichtlich der Befestigung der Schutzanordnung gemäß den Ansprüchen 5 und 6 gewährleistet eine sichere Positionierung und Halterung der Schutzanordnung, so daß sich die Schutzanordnung weder in einer Betriebs- noch in einer Außerbetriebsstellung unkontrolliert bewegen kann. Insbesondere durch die Verwirklichung der Merkmale des Anspruches 6 können bei einem mehrteiligen Rahmen mit um 180° klappbaren Seitenrahmen die Schutzanordnungen nicht nach unten fallen und beschädigt werden bzw. andere Aggregate des Bodenbearbeitungsgerätes nicht beschädigen.

Eine sichere und gegen äußere Belastungen standhafte Befestigung der Schutzschildanordnung ergibt sich durch die Verwirklichung der die Erfindung fortentwickelnden Merkmale gemäß den Ansprüchen 7 und 8.

Dadurch, daß sich der Schwenkarm und der Halterahmen quer zu der Längsrichtung des Werkzeugträgers bzw. der Arbeitsrichtung des Bodenbearbeitungsgerätes erstrecken und an diesem lösbar angeordnet sind, ist eine Einstellung der Schutzanordnung quer zu dem Werkzeugträger und somit zu den Pflanzenreihen möglich, so daß eine optimale seitliche Anpassung der Schutzschildanordnung an die Pflanzen vorgenommen werden kann.

Die ständige Verbindung des Schwenkarms mit dem Halterahmen über einen Schwenkbolzen sorgt stets für eine sichere Verbindung zwischen dem Schwenkarm und dem Halterahmen und stellt den Hauptteil eines Schwenklagers für den Schwenkarm dar.

In der Zeichnung ist ein nachfolgend näher beschriebenes Ausführungsbeispiel der Erfindung dargestellt. Es zeigt:

Figur 1    eine perspektivische Ansicht eines Teils eines Bodenbearbeitungsgerätes mit einer Schutzanordnung in Betriebsstellung,

Figur 2    eine perspektivische Ansicht eines an dem Bodenbearbeitungsgerät angebauten Schwenkmechanismusses und

Figur 3    eine perspektivische Ansicht des Bodenbearbeitungsgerätes mit der Schutzanordnung in einer Außerbetriebsstellung.

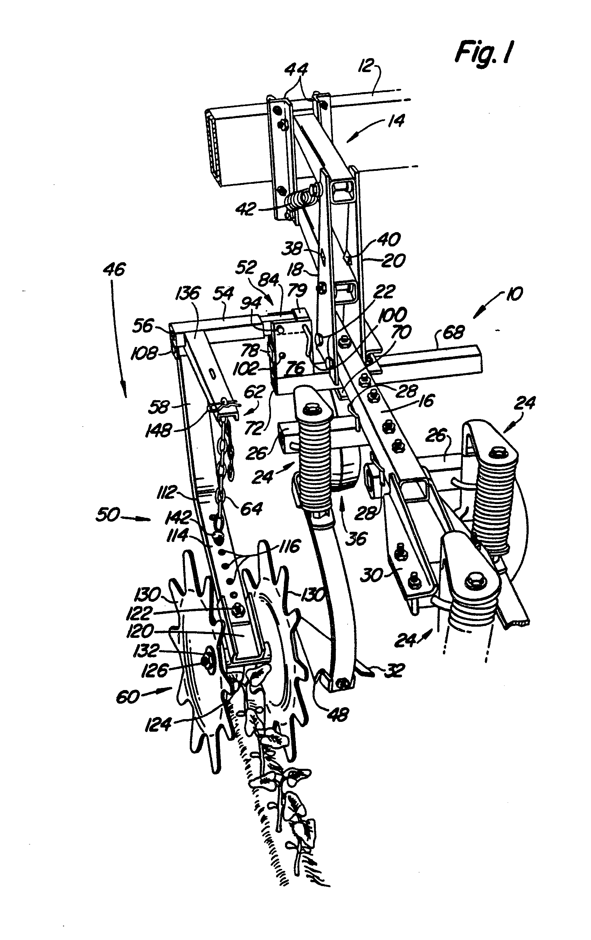

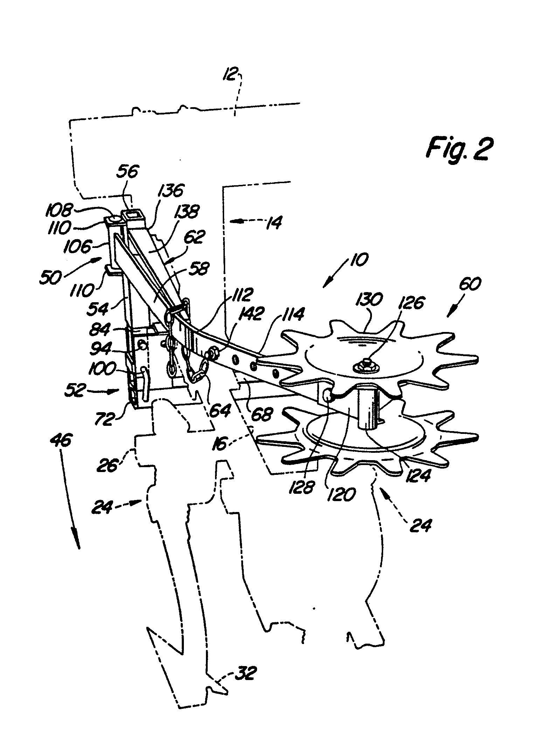

Aus Figur 1 ist ein Gestell 10 oder Werkzeugträger eines in seiner Gesamtheit nicht dargestellten Bodenbearbeitungsgerätes ersichtlich. Das Gestell 10 greift an einem Rahmen 12 oder Geräteträger über ein herkömmliches Parallelogrammgestänge 14 vertikal schwenkbar an. Es enthält einen sich längs erstreckenden Träger 16, der in der Nähe seines vorderen Endbereiches zwischen einem Paar aufrecht angeordneter Platten 18 und 20 des Parallelogrammgestänges 14 mittels Schrauben 22 gehalten ist. Begriffe wie vorne, hinten, rückwärtig, oben, unten, links und rechts beziehen sich mit Blickrichtung auf die Figuren 1 und 2 und entsprechen der Arbeitsrichtung des Bodenbearbeitungsgerätes. Eine Vielzahl von Werkzeugzusammenbauten 24 ist quer zu dem Träger 16 wie auch mit Abstand in der Fahrtrichtung zu dem Träger 16 in herkömmlicher Weise über Kurzbalken 26 und Halter 28 und über sich nach hinten erstreckende Stützen 30 angebracht. Die unteren Endbereiche der Werkzeugzusammenbauten 24 tragen üblicherweise verwendete Bodenbearbeitungswerkzeuge 32 wie etwa Grubberschare. Die Werkzeugzusammenbauten 24 sind quer zur Fahrtrichtung einstellbar, so daß die ihnen zugehörigen Bodenbearbeitungswerkzeuge 32 so angeordnet werden können, daß sie wirkungsvoll den Boden zwischen parallelen Reihen von Pflanzen, ohne die Wurzeln der Pflanzen zu zerstören, bearbeiten können.

Das vordere Ende des Trägers 16 trägt ein vertikal einstellbares Spurrad 36, das den Träger 16 gegenüber dem Boden in einem vorbestimmten Abstand abstützt, so daß die Bearbeitungstiefe der Bodenbearbeitungswerkzeuge 32 im allgemeinen konstant bleibt. Das Parallelogrammgestänge 14, das die aufrecht stehenden Platten 18 und 20 enthält, hält den Träger 16 ungefähr parallel zu dem Boden, während es dem Gestell 10 möglich bleibt, mit Bezug auf den Rahmen 12 auf und ab zu schwenken. Der Rahmen 12 ist an eine nicht gezeigte rückwärtige Dreipunktanhängevorrichtung eines ebenfalls nicht gezeigten ziehenden Fahrzeuges, etwa eines Ackerschleppers, angekoppelt und kann angehoben werden, um die Bodenbearbeitungswerkzeuge 32 aus dem Boden nehmen zu können. Anschläge 38 und 40 erstrecken sich von den Innenseiten der Platten 18 und 20 nach innen, um die nach unten gerichtete Schwenkbewegung des Gestells 10 mit Bezug auf den Rahmen 12 zu begrenzen, so daß das Gestell 10 vom Boden angehoben werden kann, wenn die Dreipunktgerätekupplung anhebt, um den Rahmen 12 in eine Transportstellung zu bringen. Wenn der Rahmen 12 in eine Betriebsstellung, also in eine Bodenbearbeitungsstellung, abgesenkt worden ist, in der das Spurrad 36 die Bodenoberfläche berührt und die Bodenbearbeitungswerkzeuge 32 den Boden bearbeiten, wird durch eine Feder 42, die zwischen den oberen Teil der Platte 18 und den unteren Teil einer aufrecht stehenden Konsole 44 montiert ist, eine zusätzliche nach unten gerichtete Belastung auf das Gestell 10 ausgeübt.

Die Vielzahl von quer zueinander einen Abstand aufweisenden und an dem Rahmen 12 angebrachten Gestellen 10 bildet zwischen jeweils zwei sich benachbarten Gestellen 10 einen offenen Pflanzenaufnahmebereich, der zwischen den beiden äußersten Bodenbearbeitungswerkzeugen 32 allgemein mit 46 bezeichnet ist. Die Bodenbearbeitungswerkzeuge 32 sind neben den Pflanzenreihen wie bei 48 veranschaulicht gekürzt, so daß kein Seitenschar oder ein anderer Teil des Bodenbearbeitungswerkzeuges 32 übermäßig viel Boden auf bzw. gegen die Pflanzen werfen kann. Jedoch wird es nicht zu vermeiden sein, daß stets ein wenig Boden zu den Pflanzen hingeschleudert wird, weshalb zum Vermeiden, daß die betreffenden Pflanzen beschädigt werden, eine Schutzanordnung 50 vorgesehen ist. Die Schutzanordnung 50 enthält einen Ausleger 52, der an dem vorderen Endbereich des Trägers 16 angebracht ist und der eine Traverse 54 oder einen Schwenkarm zum Schwenken um eine sich längs erstreckende Achse zwischen einer in Figur 1 dargestellen horizontalen und einer in Figur 2 gezeigten vertikalen Stellung trägt. Die Traverse 54 ist mit einem Außenende 56 versehen, das sich in der horizontalen Stellung in den Pflanzenaufnahmebereich 46 erstreckt, und zwar oberhalb des Niveaus des Trägers 16. Zum anderen erstreckt es sich in der vertikalen Stellung nach oben in die Nähe des oberen Bereichs der Platte 18, jedoch außerhalb des Pflanzenaufnahmebereichs 46. Eine sich längs erstreckende Schildzugstange oder Schutzhalter 58 ist mit dem Außenende 56 verbunden, um um eine Achse, die im wesentlichen parallel zu der Traverse 54 verläuft, schwenken zu können. Das rückwärtige Ende des Schutzhalters 58 trägt einen Drehschutzaufbau 60 oder Schutzschildanordnung, der längs der Bodenbearbeitungswerkzeuge 32 und nahe der Pflanzenreihen verläuft. Eine sich rückwärtig erstreckende Hängekettenanordnung 62 zum Anheben des Drehschutzaufbaues 60 ist an dem Außenende 56 befestigt und enthält eine einstellbare Spannkette 64 zum Begrenzen der Schwenkbewegung des Schutzhalters 58 mit Bezug auf die Traverse 54. Wenn sich die Traverse 54 in der horizontalen Stellung, also der Bodenbearbeitungsstellung, wie in Figur 1 gezeigt, befindet, werden die Pflanzen von dem Drehschutzaufbau 60 gegen Schmutz und Kluten, die von den Bodenbearbeitungswerkzeugen 32 aufgeworfen werden, geschützt. Wenn die Traverse 54 in die vertikale Stellung, also in die Tranport- oder Außerbetriebsstellung, wie in Figur 2 gezeigt, gebracht worden ist, dann ist der Schutzhalter 58 aus dem Pflanzenaufnahmebereich 46 heraus und gegen die Hängekettenanordnung 62 geschwenkt, so daß der Drehschutzaufbau 60 vollkommen aus einer Stellung herausgebracht ist, in der er mit dem Pflanzenaufnahmebereich 46 überlappt, und in eine Stellung gebracht worden ist, die sich im wesentlichen oberhalb des rückwärtigen Endes des Trägers 16 befindet.

Der Ausleger 52 enthält einen Halterahmen oder Querträger 68, der unterhalb der aufrecht stehenden Platten 18 und 20 mit der unteren Seite des Trägers 16 mittels herkömmlicher und in ihren Einzelheiten nicht gezeigter Verbindungselemente 70 verbunden ist. Der Querträger 68 ist noch vor dem vordersten Kurzbalken 26 angeordnet und weist einen Endbereich 72 auf, der im wesentlichen die gleiche Ausdehnung wie der Kurzbalken 26 aufweist oder mit Bezug auf die Figuren 1 und 2 gegenüber diesem geringfügig nach rechts versetzt ist. Die Traverse 54 und der Querträger 68 bilden gemeinsam einen Schwenkmechanismus.

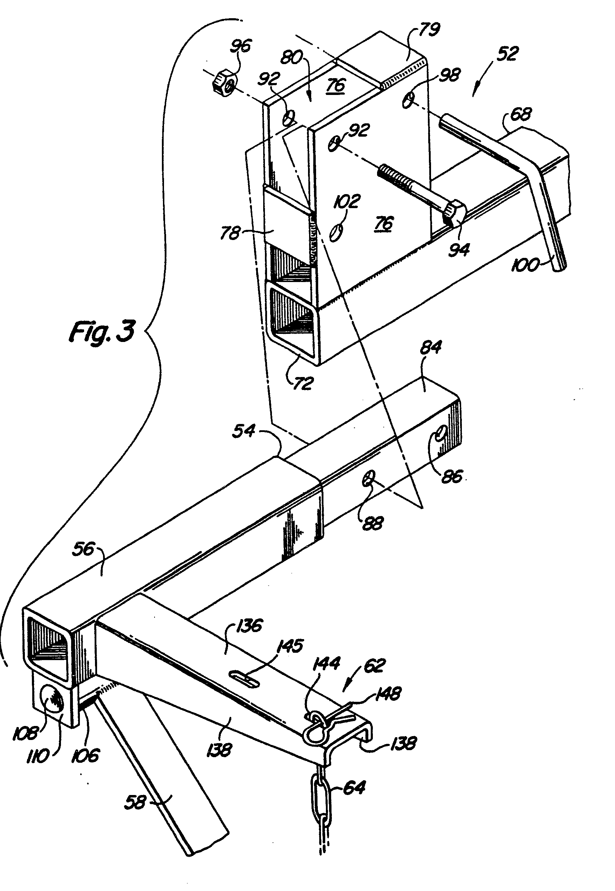

Ein Paar von mehr oder weniger identischen Platten 76 ist auf die Oberseite des Querträgers 68 aufgeschweißt und erstreckt sich vertikal von den vorderen und den rückwärtigen Stirnseiten des Endbereiches 72 des Querträgers 68 weg. Zwischen den linken und den rechten unteren Kanten der Platten 76, und zwar mit Blick auf Figur 3, ist ein Verstärkungsteil 78 eingeschweißt, während ein zweiter Verstärkungsteil 79 zwischen die oberen rechten und linken Kanten der Platten 76 eingeschweißt ist. Die Platten 76 mit den Verstärkungsteilen 78 und 79 bilden einen Aufnahmeteil oder Aufnahmebereich für die Traverse 54, der in Figur 3 einfach mit 80 bezeichnet ist und der sich sowohl nach oben wie auch zur Seite hin zu den Pflanzenreihen öffnet. Die Verstärkungsteile 78 und 79 dienen als Anschläge, wie dies weiter unten noch erläutert wird.

Die Traverse 54 ist mit einem Endbereich 84 mit verringertem Querschnitt versehen, der sich nahe der bzw. zwischen den Platten 76 befindet. Die Stirnseiten des Endbereiches 84 sind mit Durchbrüchen 86 und 88 versehen, die mit Öffnungen 92 in den aufrecht stehenden Platten 76 fluchten, so daß durch die Durchbrüche 86 und 88 wie auch durch die Öffnungen 92 ein als Schwenklager dienender Gelenkbolzen 94 gesteckt werden kann, um die Traverse 54 beweglich, und zwar in der Art eines Gelenkes, zwischen den Platten 76 aufzunehmen. Auf den Gelenkbolzen 94 ist endseitig ein Gewinde aufgedreht, das der Aufnahme einer Mutter 96 auf dem Gelenkbolzen 94 dient, so daß sich dieser nicht axial verschieben kann. Wenn die Traverse 54 um den Gelenkbolzen 94 nach oben geschwenkt ist, schlägt die untere Fläche des Endbereiches 84 an dem als Anschlag fungierenden Verstärkungsteil 78 an, um ein weiteres Verschwenken der Traverse 54 über die vertikale Stellung hinaus zu verhindern. Hingegen berührt die obere Fläche des Endbereiches 84 den Verstärkungsteil 79, wenn die Traverse 54 nach unten geschwenkt worden ist, um zu gewährleisten, daß die Traverse 54 nicht über die gewollte horizontale Stellung hinaus nach unten geschwenkt wird. Sobald die Traverse 54 die horizontale Stellung, die der Betriebsstellung entspricht, wie sie aus den Figuren 1 und 3 hervorgeht, erreicht hat, fluchten die äußersten Durchbrüche 86 der Traverse 54 mit Öffnungen 98 in den Platten 76, und ein Haltemittel in der Form eines Haltebolzens 100 kann durch die Durchbrüche 86 und die Öffnungen 98 gesteckt werden, um die Traverse 54 in ihrer horizontalen Stellung zu sichern. Um auf einfache Weise einen Wechsel von der horizontalen Stellung zu der vertikalen Stellung oder Transportstellung vornehmen zu können, entnimmt man einfach den Haltebolzen 100 aus den Durchbrüchen 86 und den Öffnungen 98 und schwenkt die Traverse 54 nach oben in ihre vertikale Stellung, in der sich die Durchbrüche 86 in dem Endbereich 84 mit einem Paar von Öffnungen 102 in den Platten 76 decken. Anschließend wird der Haltebolzen 100 durch die Öffnungen 102 und die Durchbrüche 86 gesteckt, wodurch die Traverse 54 in der Transport- oder Außerbetriebsstellung gesichert wird, wie sie aus Figur 2 hervorgeht.

Der Schutzhalter 58 enthält ein vorderes Ösenende 106, das schwenkbar mit dem Außenende 56 der Traverse 54 mittels eines Gelenkbolzens 108 verbunden ist, der sich durch Öffnungen in einem Paar von Laschen 110 erstreckt, die wiederum an die Unterseite der Traverse 54 angeschweißt sind. Die Achse des Gelenkbolzens 108 verläuft parallel zu der Achse der Traverse 54. Der Schutzhalter 58 geht zu seinem rückwärtigen Ende hin in einen Krümmungsbereich 112 über und läuft in einem Lochbereich 114 aus, in den eine Vielzahl von einen Abstand zueinander aufweisenden Löchern 116 eingebracht ist. Der Drehschutzaufbau 60 enthält einen sich nach oben öffnenden U-Profil-Teil 120, der den Lochbereich 114 des Schutzhalters 58 umfaßt, wobei eine Schraube 122 durch den U-Profil-Teil 120 und eine ausgewählte Bohrung 116 gesteckt wird, um den Drehschildaufbau 60 in der gewünschten Lage mit Bezug auf die Bodenbearbeitungswerkzeuge 32 über den Pflanzenreihen festzulegen. An die Unterseite des U-Profil-Teils 120 ist ein Lagerteil 124 montiert, in dem eine Achse 126 drehbar gelagert ist, und zwar für eine Rotationsbewegung um eine Achse, die im wesentlichen parallel zu der Achse des Gelenkbolzens 108 verläuft. Ein Paar von außen konkaven, tellerförmigen, drehenden Schutzscheiben 130 ist auf den sich entgegengesetzten Enden der Achse 126 mittels Muttern 132 befestigt. Die drehenden Schutzscheiben 130 weisen, wie dies aus Figur 1 hervorgeht, in Querrichtung einen Abstand zueinander auf, um es kleinen Pflanzen zu ermöglichen, unbeschädigt zwischen ihnen hindurch zu gelangen. Die Schraube 122 kann in verschiedene Löcher 116 eingesetzt werden, um die Lage des U-Profil-Teils 120 zu ändern und somit die Längsstellung der Schutzscheiben 130 im Hinblick auf eine geringstmögliche Beeinträchtigung der Pflanzen zu optimieren.

Um den Schutzhalter 58 mit den Schutzscheiben 130 vom Boden anzuheben, wenn der Rahmen 12 in seine Transportstellung angehoben worden ist, und um die vertikale Stellung der Schutzscheiben 130 in bezug auf das Gestell 10 einzustellen, und zwar derart, daß, falls dies gewünscht ist, auch Erdreich um die Pflanzen in geringem Maß angeschüttet werden kann, ist die Hängekettenanordnung 62 vorgesehen. Die Hängekettenanordnung 62 enthält einen sich nach unten öffnenden hohlen Schutzaufhänger 136, der mit seinem vorderen Ende an das Außenende 56 der Traverse 54 angeschweißt ist. Der Schutzaufhänger 136 verläuft im wesentlichen horizontal und weist Seitenwände 138 mit unteren Kanten auf, die sich in Richtung auf die Oberseite des Schutzaufhängers 136 und dessen rückwärtiges Ende hin verjüngen. Die

Spannkette 64 ist an einem ihrer Enden durch eine Schraube 142 mit einem der Löcher 116 des Schutzhalters 58 verbunden. An ihrem gegenüberliegenden Ende ist ein vorbestimmtes Kettenglied der Spannkette 64 durch eine Öffnung von einem Paar von Öffnungen 144, 145 gesteckt, die in Längsrichtung einen Abstand zueinander aufweisen und in dem Schutzaufhänger 136 angeordnet sind. Durch dieses ausgesuchte Kettenglied ist ein Splint 148 gesteckt, um die Spannkette 64 in dem Schutzaufhänger 136 zu halten. Beim Einsatz in Pflanzenbeständen mit niedrigem Wuchs wird die Spannkette 64 ziemlich lang zwischen dem Schutzaufhänger 136 und dem Schutzhalter 58 gehalten, damit die Schutzscheiben 130 die bestmögliche Schutzwirkung gegenüber den Pflanzen entfalten können. Wird hingegen der Boden zwischen reiferen und somit größeren Pflanzen bearbeitet, dann kann die wirksame Länge der Spannkette 64 so verringert werden, daß die Schutzscheiben 130 mit Bezug auf die Bodenbearbeitungswerkzeuge 32 höher abrollen oder getragen werden, so daß ein wenig Erdreich um den unteren Stielbereich der Pflanzen geworfen werden kann. Da die Schutzanordnung 50 an den Träger 16 montiert ist, bleibt die räumliche Beziehung der Schutzscheiben 130 mit Bezug auf die Bodenbearbeitungswerkzeuge 32 und mit Bezug auf die Pflanzenreihen besser erhalten, als wenn beispielsweise, wie aus dem Stand der Technik bekannt, die Schutzanordnung 50 direkt schwenkbar an dem Rahmen 12 angreifen würde.

Während des Betriebs und wenn eine Bedienungsperson es wünscht, daß die Pflanzen durch die Schutzscheiben 130 geschützt werden, wird die Traverse 54 in die horizontale Stellung geschwenkt, wie dies aus Figur 1 ersichtlich ist, und der Haltebolzen 100 wird, wie zuvor beschrieben, in die Durchbrüche 86 und die Öffnungen 98 eingesetzt, um die Traverse 54 in dieser Stellung zu halten. Die Schutzscheiben 130 rollen dann auf jeder Seite der Pflanzenreihe um die sich quer erstreckende Achse 126 über den Boden. Der Schutzhalter 58 kann sich währenddessen um den Gelenkbolzen 108 auf- und abbewegen, um es den Schutzscheiben 130 zu ermöglichen, daß sie den Bodenunebenheiten folgen und über auf dem Boden liegende Gegenstände rollen können. Wenn schlanke Pflanzen, wie etwa relativ reifer Mais, gehackt oder gegrubbert, also ausgelichtet, werden sollen, kann die Bedienungsperson die Schutzanordnung 50 vollkommen aus dem Pflanzenaufnahmebereich 46 entfernen, indem sie den Haltebolzen 100 entnimmt und die Traverse 54 um den Gelenkbolzen 94 über einen Winkel von ungefähr 90° nach oben in die vertikale Stellung schwenkt, wie sie aus Figur 2 ersichtlich ist. Danach wird der Haltebolzen 100 durch die Durchbrüche 88 und die Öffnung 102 gesteckt, um die Schutzanordnung 50 in der Transport- oder Außerbetriebsstellung zu verriegeln. Da sich der Gelenkbolzen 108 nun in einer vertikalen Lage befindet, kann sich der Schutzhalter 58 nicht mehr wesentlich auf- und abbewegen, sondern er wird zurückgehalten, so daß er nur noch eine Bewegung in der horizontalen Ebene durchführen kann. Dabei ist der Schutzhalter 58 gegen die unteren Kanten der Seitenwände 138 des Schutzaufhängers 136 geschwenkt worden. Die Spannkette 64 kann dann benutzt werden, um den Schutzhalter 58 gegenüber dem Schutzaufhänger 136 zu sichern, um zu verhindern, daß der Drehschutzaufbau 60 in den Pflanzenaufnahmebereich 46 hineinschwenkt. Wie am besten aus Figur 2 hervorgeht, ist der Krümmungsbereich 112 nahe dem rückwärtigen Ende des Schutzaufhängers 136 gelegen, und der rückwärtige Lochbereich 114 des Schutzhalters 58 ist mit Blick auf Figur 2 nach rechts abgewinkelt, so daß der Drehschutzaufbau 60 oberhalb des Gestelles 10 derart zu liegen kommt, daß er sich vollkommen außerhalb des Pflanzenaufnahmebereichs 46 befindet, so daß er mit den Pflanzen nicht in Berührung kommt, wenn das Bodenbearbeitungsgerät vorwärts über das Feld gezogen wird. Die Länge der Traverse 54 von dem Gelenkbolzen 94 bis zu dem Gelenkbolzen 108 reicht aus, um den gesamten Drehschutzaufbau 60 so weit zu verlagern, daß er nicht in den obersten Bereich der Werkzeugzusammenbauten 24 eintaucht. In der Transport- oder Außerbetriebsstellung liegt der dann obere Bereich der Traverse 54 nahe an der Platte 18 des Parallelogrammgestänges 14, und das vordere Ende des Schutzhalters 58 liegt außerhalb des Pflanzenaufnahmebereiches 46, wie dies aus Figur 2 hervorgeht.

## Patentansprüche

1. Bodenbearbeitungsgerät mit einem Rahmen (12) zur Bearbeitung des zwischen zwei Pflanzenreihen befindlichen Bodens, mit mindestens einem Werkzeugträger (10), der an dem Rahmen (12) angreift, und mit mindestens einer vertikal schwenkbaren Schutzanordnung (50) zum seitlichen Abschirmen der Pflanzen während des Bodenbearbeitungsvorgangs, die seitlich des Werkzeugträgers (10) angeordnet ist, dadurch gekennzeichnet, daß die Schutzanordnung (50) aus dem Freiraum oberhalb der Pflanzen heraus und in einen Bereich oberhalb des Werkzeugträgers (10) schwenkbar ist.

2. Bodenbearbeitungsgerät nach Anspruch 1, dessen Schutzanordnung (50) ein horizontales Schwenklager (94) aufweist, dadurch gekennzeichnet, daß sich das Schwenklager (94) längs des Werkzeugträgers (10) erstreckt und die Schutzanordnung (50) mit dem Werkzeugträger (10) schwenkbar verbindet.

3. Bodenbearbeitungsgerät nach Anspruch 1 oder 2, wobei der Werkzeugträger vertikal beweglich an dem Rahmen (12) angreift und auf dem Boden mittels eines Spurrades (36) getragen wird, dadurch gekennzeichnet, daß die Schutzanordnung (50) mit dem Werkzeugträger (10) verbunden ist.

4. Bodenbearbeitungsgerät nach Anspruch 2 und 3, dadurch gekennzeichnet, daß die Schutzanordnung (50) einen Schwenkarm (54), einen Halterahmen (68) und eine Schutzschildanordnung (60) aufweist, wobei die Schutzschildanordnung (60) vertikal und in der Arbeitsrichtung des Bodenbearbeitungsgeräts schwenkbar an dem Schwenkarm (54) und der Schwenkarm (54) vertikal und quer zur Arbeitsrichtung des Bodenbearbeitungsgerätes schwenkbar an dem Halterahmen (68) angeordnet ist.

**DEERE & COMPANY**

EUROPEAN OFFICE

- 15 -

**0172483**

5. Bodenbearbeitungsgerät nach Anspruch 4, dadurch gekennzeichnet, daß der Schwenkarm (54) gegenüber dem Halterahmen (68) in mindestens zwei Schwenkstellungen festlegbar ist und an jeder Schwenkstellung ein Anschlag (78, 79) zur Bestimmung der Schwenkstellung vorgesehen ist.

6. Bodenbearbeitungsgerät nach Anspruch 5, dadurch gekennzeichnet, daß in jeder Schwenkstellung Haltemittel (100) zur Festlegung des Schwenkarms (54) an dem Halterahmen (68) vorgesehen sind.

7. Bodenbearbeitungsgerät nach einem oder mehreren der vorherigen Ansprüche, dadurch gekennzeichnet, daß der Halterahmen (68) einen gegabelten Aufnahmeteil (80) aufweist, der in sich einen Endbereich des Schwenkarms (54) beweglich aufnimmt.

8. Bodenbearbeitungsgerät nach Anspruch 6 und 7, dadurch gekennzeichnet, daß die Haltemittel (100) aus einem den gegabelten Aufnahmeteil (80) und den Endbereich (84) des Schwenkarmes (54) durchdringenden Haltebolzen (100) bestehen.

9. Bodenbearbeitungsgerät nach einem oder mehreren der vorherigen Ansprüche, dadurch gekennzeichnet, daß sich der Schwenkarm (54) und der Halterahmen (68) quer zu der Längsrichtung des Werkzeugträgers (10) bzw. der Arbeitsrichtung des Bodenbearbeitungsgerätes erstrecken und an diesem lösbar angeordnet sind.

10. Bodenbearbeitungsgerät nach einem oder mehreren der vorherigen Ansprüche, dadurch gekennzeichnet, daß der Schwenkarm (54) über einen Gelenkbolzen (94) ständig in Schwenkverbindung mit dem Halterahmen (68) steht.

*Fig. 1*

Fig. 2

0172483

J/J

Fig. 3

Europäisches
Patentamt

EUROPÄISCHER RECHERCHENBERICHT

0172483
Nummer der Anmeldung

EP 85 10 9821

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | DE-U-1 936 259 (MASCHINENFABRIK RAU) <br> * Schutzansprüche 1-4; Figuren 1, 2 * | 1,9 | A 01 B 39/26 |
| | --- | | |
| A | US-A-1 377 183 (A.E. CALK) <br> * Figur 1; Seite 1, Zeilen 91-95, ab Zeile 100 - Seite 2, Zeile 1 * | 1 | |
| | ----- | | |

RECHERCHIERTE
SACHGEBIETE (Int. Cl.4)

A 01 B 39/26
A 01 B 33/12
A 01 B 39/16

Der vorliegende Recherchenbericht wurde für alle Patentansprüche erstellt

| Recherchenort <br> BERLIN | Abschlußdatum der Recherche <br> 10-10-1985 | Prüfer <br> SAMWEL P.N. |
|---|---|---|